# EUROPÄISCHE PATENTSCHRIFT

(11) **EP 3 768 605 B1**
(45) Veröffentlichungstag und Bekanntmachung des Hinweises auf die Patenterteilung: **11.05.2022**
(21) Anmeldenummer: 19715394.3
(22) Anmeldetag: 07.03.2019
(51) Int. Cl.: B65D 75/32

(54) **BLISTERVERPACKUNG MIT KLEB-, BESCHICHTUNGS- ODER DICHTSTOFF-FORMKÖRPER**
BLISTER PACK CONTAINING A SHAPED ADHESIVE, COATING MATERIAL OR SEALANT ARTICLE
EMBALLAGE-COQUE POURVU DE CORPS MOULÉS DE MATÉRIAU ADHÉSIF, DE MATÉRIAU DE REVÊTEMENT OU DE MATÉRIAU ÉTANCHE

(30) Priorität: 19.03.2018 DE 202018001436 U
(43) Veröffentlichungstag der Anmeldung: 27.01.2021
(73) Patentinhaber: Klebchemie M.G. Becker GmbH & Co. KG, 76356 Weingarten/Baden (DE)
(72) Erfinder: FAHRLÄNDER, Michael, 76297 Stutensee (DE); FICHT, Tobias, 75015 Bretten (DE); HEUSER, Uwe, 76149 Karlsruhe (DE); HÖHN, Walter, 72631 Aichtal (DE)
(74) Vertreter: Büchel, Edwin
(86) Internationale Anmeldenummer: PCT/EP2019/055681
(87) Internationale Veröffentlichungsnummer: WO 2019/179780

(56) Entgegenhaltungen:
- WO-A1-2014/074599
- CN-B- 103 289 631
- US-A- 4 341 302
- US-A- 4 748 796
- US-A1- 2009 082 485

## Beschreibung

Die vorliegende Erfindung betrifft eine Blisterverpackung gefüllt mit einem Klebstoff-, Beschichtungs- und Dichtstoff-Formkörper sowie ein Verfahren zu deren Herstellung.

Thermoplastische Klebstoffe, Beschichtungen und Dichtstoffe werden in vielen handwerklichen, gewerblichen als auch industriellen Anwendungen z.B. der Holz- und Möbelindustrie, der Automobilindustrie, der Textilindustrie oder der Verpackungsindustrie in Form von Granulaten eingesetzt. Thermoplastische Klebstoffe, Beschichtungen und Dichtstoffe in Granulatform haben den Vorteil, dass sie einfach zu handhaben und gut zu portionieren sind und dabei die meisten Anforderungen z.B. bzgl. der Wärmebeständigkeit erfüllen. Die Granulate werden dabei zumeist direkt in Schmelzbecken gefüllt und dort aufgeschmolzen oder über einen Vorschmelzer aufgeschmolzen.

Bei höheren Anforderungen an die Klebstoffe, z.B. in Bezug auf deren Feuchte- oder Wärmeformbeständigkeit, sind thermoplastische Klebstoffe, Beschichtungen und Dichtstoffe häufig nicht mehr ausreichend. Deshalb greift man in einem solchen Fall auf reaktive Klebstoffe, Beschichtungen und Dichtstoffe zurück, die entweder mittels Luftfeuchte, thermisch oder unter UV-Licht vernetzen. Solche reaktiven Klebstoffe müssen dann aber zumeist durch eine geeignete Verpackung vor Luftfeuchte bzw. vor UV-Licht geschützt werden.

Solche reaktiven Klebstoffe, Beschichtungen und Dichtstoffe sind üblicherweise in Verpackungsgrößen von 2 kg - 200 kg kommerziell erhältlich. Für Anwender mit kleineren Verbräuchen wie z. B. Schreinern wären allerdings kleinere Verpackungsformen von Interesse, da sich der Klebstoff bei Verwendung von größeren Verpackungen durch die dann lange Verweilzeit in den Schmelzgeräten verändern kann und gegebenenfalls entsorgt werden muss.

Eine solche Anwendung mit vergleichsweise geringen Verbrauchsmengen ist z.B. das Anleimen von Kantenmaterialien an Möbelplatten in Schreinereien. Nach dem Zurechtsägen der zumeist zugekauften großformatigen Platten weisen diese eine Schnittkante auf. Mithilfe von Kantenanleimmaschinen werden zur Fertigstellung des Holzzuschnittes Kantenmaterialien, meist von der Rolle, mit Hilfe von Schmelzklebstoffen angeleimt.

Zur Verarbeitung von Schmelzklebstoffen z.B. auf Basis von EVA-oder Polyolefin Granulat steht meist an Kantenanleimmaschinen ein Vorschmelzer zur Verfügung. Dieser Vorschmelzer versorgt ein Schmelzbecken, aus welchem die Klebstoffentnahme für die Applikation auf das Substrat erfolgt.

Sofern das Möbelstück in einer Umgebung mit höherer Luftfeuchte wie z.B. im Bad oder in der Küche aufgestellt wird, werden bevorzugt reaktive Polyurethanschmelzklebstoffe eingesetzt. Diese zeichnen sich nach Aushärtung mittels Luftfeuchte durch eine höhere Wärmeformbeständigkeit sowie Feuchteunempfindlichkeit aus. Die Verarbeitung von reaktiven Polyurethanschmelzklebstoffen erfolgt an Kantenanleimmaschinen meist mit Hilfe eines separaten Vorschmelzer. Zum Einsatz kommen Klebstoffkerzen mit einem ungefähren Durchmesser von 125 mm und einem Gewicht von ca. 2 kg. Analog wie auch bei der Verarbeitung von EVA-oder Polyolefin-Granulat versorgt der PU-Vorschmelzer das Schmelzbecken.

In der Praxis hat sich herausgestellt, dass Verpackungsgrößen von reaktiven Polyurethanschmelzklebstoffen zu 2 kg nur für Anwender mit einem hohen Verbrauch wirtschaftlich vertretbar sind. Um auch Anwender z.B. kleinere Schreinereien, welche geringere Mengen an reaktiven Polyurethanschmelzklebstoffen verarbeiten, eine Lösung zu bieten, wurden reaktive Polyurethanschmelzklebstoffe in Granulatform auf dem Markt eingeführt. Diese Polyurethanschmelzklebstoff-Granulate können portionsgenau direkt in das Schmelzbecken gegeben werden. Das Polyurethanschmelzklebstoff-Granulat wird in handelsüblichen Mengen von ca. 1 kg fassenden Weißblech-Dosen angeboten.

Ein Nachteil bei feuchtigkeitsreaktiven Polyurethanschmelzklebstoffen in Granulatform ergibt sich aus deren großer Oberfläche und der damit gesteigerten Reaktivität gegenüber Luftfeuchtigkeit, die dazu führen kann, dass die Klebstoffe schon vor ihrer eigentlichen Verwendung mit Luftfeuchte reagieren können, da die übliche Verpackungsform von 1 kg mehrfach geöffnet wird, bevor diese komplett verbraucht ist. Solche bereits vorvernetzten Polyurethanschmelzklebstoffe können nicht mehr in einen Schmelze-Flüssigen-Zustand überführt werden und eigen sich somit nicht mehr für die Verarbeitung. Außerdem ist die Herstellung von Polyurethanschmelzklebstoff-Granulat aufwändig, da bei der Herstellung des Granulates dieses unbedingt vor Luftfeuchtigkeit geschützt werden muss, um zu verhindern, dass das Granulat bereits bei der Herstellung ausregiert.

WO 2014/074599 A1 beschreibt einen Applikator, ein zugehöriges Applikatorsystem und ein Verfahren zum Liefern eines selbstklebenden Materials. Der Applikator umfasst eine Außenfläche und eine Innenfläche gegenüber der Außenfläche. Die Innenfläche des Applikators definiert einen Hohlraum, der zur Aufnahme des selbstklebenden Materials dient. Mindestens ein Teil der Innenfläche haftet lösbar an der Applikatorseite des selbstklebenden Materials, wobei die Adhäsionskraft zwischen dem Abschnitt der Innenfläche und der Applikatorseite geringer ist als die Adhäsionskraft zwischen dem Substrat und der Substratseite. Der Applikator wird verwendet, indem der Applikator in Kontakt mit einem Substrat gebracht wird und der Applikator so gegen das Substrat gedrückt wird, dass das selbstklebende Material (130) am Substrat haftet und der Applikator freigegeben wird.

US 4 748 796 A beschreibt eine offene Gießform und einen Gegendeckel, die elektrostatisch mit einem Pulverschirm beschichtet werden. Gussmaterial wird in die Form gegossen, ohne das Pulver zu beeinträchtigen, indem das Pulver mit statischer Elektrizität in Position gehalten wird. Das Gießmaterial kann aushärten und ein Schirm aus pulverförmigem oder fettigem Material wird auf die Oberseite des gehärteten Materials gelegt sowie ein Schutzfilm über dem Schirm aufgebracht.

Der vorliegenden Erfindung lag deshalb die Aufgabe zu Grunde bevorzugt reaktive Klebstoffe, Dichtstoffe und Beschichtungen in einer wirtschaftlichen und für bevorzugt kleinere Verbraucher geeigneten Verpackungsgröße zur Verfügung zu stellen.

Die Aufgabe wird gelöst durch eine mit einem bei Raumtemperatur festen Kleb-, Beschichtungs- oder Dichtstoff-Formkörper gefüllte Blisterverpackung mit einem Kunststofffolienformteil, welches mindestens eine Kavität aufweist, und einer Deckelfolie, wobei die mindestens eine Kavität ein Füllvolumen an Klebstoff, Beschichtungsmaterial oder Dichtstoff im Bereich von 5 ml bis 500 ml, vorzugsweise von 10 ml bis 100 ml, aufweist und die Deckelfolie die Kavität verschließt und dass der Klebstoff, das Beschichtungsmaterial oder der Dichtstoff eine Viskosität von 2.000 bis 200.000 mPas nach Brookfield bei zumindest einer Temperatur in einem Temperaturbereich von 80°C bis 180°C aufweist, dass der Kunststofffolienformteil und die Deckelfolie miteinander verschweißt oder verklebt sind und dass die Deckelfolie eine Aluminiumfolie, eine metallisierte Verbundfolie, ein Laminat aus Aluminium/Propylen oder eine siegelfähige mit SiOₓ oder AlOₓ beschichtete Monofolie darstellt.

Ein weiterer Gegenstand der vorliegenden Erfindung ist ein Verfahren zur Herstellung einer erfindungsgemäßen Blisterverpackung, die Schritte enthaltend
(a) Befüllen mindestens einer Kavität eines Kunststofffolienformteiles mit einem bei Raumtemperatur festen Klebstoff, Beschichtungsmaterial oder Dichtstoff und
(b) Verbinden des Kunststofffolienformteiles mit einer Deckelfolie zum Verschließen der mindestens einen Kavität, wobei der Kunststofffolienformteil (2) und die Deckelfolie (4) miteinander verschweißt oder verklebt werden.

Dadurch ist es möglich, dass Klebstoffe, Dichtstoffe und Beschichtungsmaterialien portionsgerecht abgefüllt sind und die oben genannten Nachteile zumindest teilweise vermieden werden. Überraschenderweise ist die Entnahme solcher Formkörper aus Klebstoff, Dichtstoff und Beschichtungsmaterial problemlos möglich, selbst wenn diese im heiß-flüssigen Zustand in die Kavität eingefüllt werden und dann zum Formkörper zumindest bei Raumtemperatur erstarren.

Manchmal wird der Begriff "Blister" oder "Blisterverpakung" als Sichtverpackung bezeichnet, so dass zumindest der die Kavität aufweisende Formteil nach außen durchsichtig ist. Im Rahmen der vorliegenden Erfindung ist jedoch der Begriff "Blister" oder "Blisterverpackung" nicht dahingehend einschränkend zu verstehen. Vielmehr umfasst der Begriff "Blister" oder "Blisterverpackung" auch Ausführungsformern, bei denen nur eine teilweise Durchsichtigkeit oder Undurchsichtigkeit vorliegt.

Das Kunststofffolienformteil kann aus einer sogenannten Bodenfolie durch Einbringen von Kavitäten hergestellt werden. Nach Befüllen des Kunststofffolienformteils mit den bevorzugt reaktiven Klebstoffen, Dichtstoffen und Beschichtungsmaterialien wird das Kunststofffolienformteil mit der Deckelfolie verschweißt oder verklebt.

Dementsprechend ist ein bevorzugter Gegenstand der vorliegenden Erfindung eine Blisterverpackung, bei der der Klebstoff, das Beschichtungsmaterial oder der Dichtstoff ein reaktiver Klebstoff, ein reaktives Beschichtungsmaterial oder ein reaktiver Dichtstoff ist. Vorzugsweise ist der reaktive Klebstoff, das reaktive Beschichtungsmaterial oder der reaktive Dichtstoff mittels Luftfeuchte, thermisch und/oder unter UV-Licht vernetzbar. Weiterhin ist bevorzugt, dass der Klebstoff, das Beschichtungsmaterial oder der Dichtstoff ein feuchtigkeitsreaktiver Polyurethanschmelzklebstoff, ein feuchtigkeitsreaktiver Polyolefinschmelzklebstoff, ein UV-härtbarer Schmelzklebstoff auf Acrylatbasis oder ein Dual Cure-Schmelzklebstoff ist. Solche Schmelzklebstoffe eignen sich sowohl zum Verkleben als auch zum Dichten oder Beschichten und werden im Stand der Technik sowie im Rahmen der vorliegenden Erfindung vereinfachend als "Klebstoff" bezeichnet, auch wenn diese als Beschichtungsmaterial oder Dichtstoff dienen.

Bevorzugt werden die Kavitäten durch Kaltformen in die Bodenfolien eingebracht. Eine weitere Möglichkeit in Bodenfolien Kavitäten einzubringen, bietet das Thermoformen. Hier werden die Kavitäten nach einer vorgeschalteten Erhitzung in die Bodenfolien eingebracht.

Eine Blisterverpackung gemäß der vorliegenden Erfindung kann eine oder mehrere Kavitäten aufweisen. Vorzugsweise enthält diese nur eine Kavität. Die Kavität oder die Kavitäten sind jeweils mit einem Kleb-, Beschichtungs- oder Dichtstoff-Formkörper belegt.

Insbesondere bevorzugt werden als Bodenfolien Verbundfolien mit einem Aufbau Polyamid / Aluminium / Polypropylen. Die enthaltene Aluminiumschicht bewirkt eine Barriere gegenüber Wasserdampf (WVTR: ≤ 0,01 g/m² x d @ 25 °C / 100 % r.h.) und Sauerstoff (OTR: ≤ 0,005 cm³/m² x d @ 25 °C / 50 % r.h.). Auch andere siegelfähige Laminattypen oder Mono-Folien, welche gute Barriere-Eigenschaften besitzen, wie metallisierte Folien oder mittels SiOx oder AlOx beschichtete Folien werden bevorzugt als Bodenfolie eingesetzt. Die als Bodenfolien geeigneten Mono- oder Verbundfolien haben eine Gesamtdicke von bevorzugt 20 µm bis 500 µm, besonders bevorzugt 50 µm bis 300 µm.

Dementsprechend ist in einer bevorzugten Ausführungsform das Kunststofffolienformteil aus einer Verbundfolie gebildet wird, die mindestens eine Kunststoffschicht aufweist. Vorteilhafterweise enthält die Verbundfolie eine Aluminiumschicht, vorzugsweise enthält die Verbundfolie Schichten aus Polyamid / Aluminium / Polypropylen, insbesondere bevorzugt in der Weise, dass die Polypropylenschicht die Innenschicht und die Polyamidkunststoffschicht die Außenschicht darstellt.

Die Verbundfolie kann weitere Schichten, insbesondere zur Haftvermittlung aufweisen. So können Klebstoffe, wie Polyurethanklebstoff und gegebenenfalls Primer verwendet werden, um die Verbundfolie zu erhalten. Kommerziell erhältliche Produkte sind beispielsweise Formpack^{®} Kaltformlaminate den Firmen Amcor Flexibles Singen GmbH oder Amcor Flexibles Kreuzlingen AG.

Wie bereits oben ausgeführt wurde, ist es bevorzugt, dass das Kunststofffolienformteil eine Kavitätenwandung mit einer Dicke im Bereich von 20 µm bis 500 µm, vorzugsweise 50 µm bis 300 µm, aufweist.

Die Befüllung der Kunststofffolienformteile erfolgt unter Ausschluss von Luft-Sauerstoff sowie der darin enthaltenen Luftfeuchte. Hierzu wird eine inerte Umgebung geschaffen. Verwendet werden insbesondere bevorzugte Inertgase wie Argon oder Stickstoff. Bevorzugt kann auch getrocknete Luft verwendet werden.

Die Befüllung der Kavität wird bei Temperaturen zwischen 80 und 180°C, bevorzugt bei Temperaturen zwischen 120 und 160 °C durchgeführt, d.h. bei Temperaturen bei denen der Klebstoff, der Dichtstoff bzw. das Beschichtungsmaterial fließfähig sind und damit die Kavität vollständig ausfüllen können.

Daher ist auch bevorzugt, dass der Kleb-, Beschichtungs- oder Dichtstoff-Formkörper an die Form der Kavität angepasst ist. Allgemein kann daher der Kleb-, Beschichtungs- oder Dichtstoff-Formkörper die Form einer Kugelscheibe, einer Halbkugel, eines Kugelabschnittes, eines Halbellipsoiden oder eines Halbzylinders bzw. eines beidseitig an den Enden abgerundeten Halbzylinders aufweisen.

Dementsprechend ist es bevorzugt, dass der Kleb-, Beschichtungs- oder Dichtstoff-Formkörper einen Schmelz- oder Erweichungspunkt von oberhalb 40°C aufweist. Der Klebstoff, das Beschichtungsmaterial oder der Dichtstoff weist eine Viskosität von 2.000 bis 200.000 mPas nach Brookfield bei zumindest einer Temperatur in einem Temperaturbereich von 80°C bis 180°C aufweist. Hierbei ist es nicht erforderlich, dass eine bestimmte Viskosität über den gesamten Temperaturbereich eingehalten sein muss.

Weiterhin ist bevorzugt, dass die mindestens eine Kavität ein Volumen aufweist, das zu mindestens 50 %,mehr bevorzugt mindestens 60 %, mehr bevorzugt mindestens 70 %, mehr bevorzugt mindestens 80 %, insbesondere mindestens 90% durch das Füllvolumen an Kleb-, Beschichtungs- oder Dichtstoff belegt ist. Dementsprechend ist bevorzugt, dass höchstens 50 %, weiter bevorzugt höchstens 40%, weiter bevorzugt höchstens 30 %, weiter bevorzugt höchstens 20 %, weiter bevorzugt höchstens 10 % des Kavitätenvolumens nicht vom Formkörper eingenommen wird und bevorzugt das Inertgas, wie Argon oder Stickstoff oder bevorzugt getrocknete Luft aufweist. Dabei ist bevorzugt, dass die Kavitätentiefe bis zu 50 mm betragen kann.

Die Verschweißung der Kunststofffolienformteile erfolgt mittels Deckelfolien aus Aluminium, auf welchen bevorzugt ein Heißsiegellack (z.B. aus Polypropylen) aufgebracht ist. Eine Verschweißung ist auch mit einer Polypropylen-Folie möglich, welche Bestandteil eines Laminats mit mindestens dem Aufbau Aluminium / Polypropylen ist.

Dementsprechend ist eine Blisterverpackung vorgesehen, bei der die Deckelfolie eine Aluminiumfolie, eine metallisierte Verbundfolie oder eine siegelfähige mit SiOₓ oder AlOₓ beschichtete Monofolie, insbesondere eine Aluminiumfolie, darstellt. Die Deckelfolie kann weitere Schichten aufweisen, wie einen Außenlack, beispielsweise auf Basis von Nitrocellulose, oder einen Siegellack, wie einen Heißsiegellack, beispielsweise aus Polyproplyen. Damit ist eine Verschweißung mit dem Kunststofffolienformteil möglich. Solche Folien sind beispielsweise als Durchbruchfolien kommerziell erhältlich, beispielsweise von den Firmen Amcor Flexibles Singen GmbH oder Amcor Flexibles Kreuzlingen AG.

Daher ist weiterhin bevorzugt, dass das Kunststofffolienformteil und die Deckelfolie mit Hilfe eines Heißsiegellackes verschweißt sind und dieser vorzugsweise aus Polypropylen besteht.

Laminattypen aus Aluminium / Polypropylen sowie ein Folienverbund aus metallisierter Folie oder siegelfähige Mono-Folien, welche eine Beschichtung (SiOX oder AIOx) besitzen, werden ebenfalls als Deckelfolien verwendet. Laminattypen oder weitere siegelfähige Mono-Folien, welche entsprechende Barriere-Eigenschaften aufweisen und sich verarbeiten lassen, werden ebenfalls bevorzugt behandelt. Die Deckelfolie muss bei entsprechender Empfindlichkeit des Kleb-, Beschichtungs- oder Dichtstoff-Formkörpers entsprechende Eigenschaften gegenüber Wasserdampf- sowie Sauerstoffundurchlässigkeiten aufweisen, entsprechend der Verbundfolien, welche bevorzugt als Bodenfolie zur Herstellung der Kavitäten verwendet werden.

Die Deckelfolie weist bevorzugt eine Dicke von 10 µm bis 200 µm, besonders bevorzugt von 10 µm bis 100 µm auf. Typischerweise ist die Deckelfolie jedoch dünner als die Kavitätenwandung.

Alternativ zur obigen Verschweißung der Deckelfolie mit dem Kunststofffolienformteil kann auch ein geeigneter Klebstoff zur Verklebung der Deckelfolie mit dem Kunststofffolien-Formteil verwendet werden. Die Verschweißung bzw. Verklebung der Deckelfolie mit dem Kunststofffolienformteil erfolgt vorzugsweise direkt nach der Befüllung, so dass ausgeschlossen ist, dass der vorzugsweise reaktive Klebstoff, der vorzugsweise reaktive Dichtstoff bzw. das vorzugsweise reaktive Beschichtungsmaterial beispielsweise mit Luftfeuchte, UV-Strahlung oder beidem schon bei der Herstellung vernetzt. Das ist ein wesentlicher Vorteil gegenüber der Herstellung von Granulat von zum Beispiel reaktiven Polyurethanschmelzklebstoff, da dort das Granulat sich erst verfestigen muss, bevor es verpackt werden kann.

Zur Verschweißung der Kunststofffolienformteile mittels Deckelfolie werden insbesondere bevorzugt Siegelplatten eingesetzt, welche eine Riffelung aufweisen. Bedingt durch eine Siegelstruktur mit Riffelung können die Blisterverpackungen durch Aufpeelen des Kunststofffolienformteils und/oder der Deckelfolie geöffnet werden. Besonders bevorzugt werden Siegelplatten mit flacher Siegelfläche verwendet. Hierdurch entsteht eine feste Verschweißung der Deckelfolie mit dem Kunststofffolienformteil. Die Entnahme des Kleb-, Beschichtungs-, oder des Dichtstoff-Formkörpers ist beispielsweise durch Herausdrücken durch die Deckelfolie möglich. Die Versiegelung (Verschweißen) der Deckelfolie mit dem Kunststofffolien-Formteil erfolgt bevorzugt bei Temperaturen von 100-200°C, besonders bevorzugt bei 160-200°C.

Dementsprechend ist in einer weiteren bevorzugten Ausführungsform eine Blisterverpackung vorgesehen, bei der die Deckelfolie auf der der mindestens einen Kavität abgewandten Seite eine Riffelung aufweist.

Typische Schmelzbecken an Kantenanleimmaschinen weisen ein Volumen von 350 bis 750 ml auf. Für eine möglichst wirtschaftliche Verpackungsgröße werden insbesondere Kavitäten mit Kavitätsvolumen von bevorzugt 5 bis 500 ml, besonders bevorzugt von 10 bis 100 ml verwendet. Bei vollständiger Belegung mit dem Kleb-, Beschichtungs- oder Dichtstoff-Formkörper entspricht dies auch dem Füllvolumen. Bei der Form der Blisterverpackung gibt es keine Einschränkung. Die Tiefe der Blister liegt bevorzugt im Bereich von 2 mm bis 50 mm besonders bevorzugt im Bereich von 5 mm bis 25 mm.

Bevorzugt werden im Rahmen der vorliegenden Erfindung reaktive Klebstoffe Beschichtungsmaterialien und Dichtstoffe eingesetzt, die durch Luftfeuchte, Temperatureinwirkung, oder unter UV-Licht chemisch vernetzen. Beispiele für reaktive Klebstoffe, Beschichtungsmaterialien und Dichtstoffe sind die dem Fachmann bekannten reaktiven Polyurethanschmelzklebstoffe und reaktiven Polyolefinschmelzklebstoffe, UVhärtbare Schmelzklebstoffe auf Acrylatbasis, sogenannte DualCure-Schmelzklebstoffe wie sie aus der internationalen Patentanmeldung WO 2006/106143 A1 bekannt sind und die außer mit Luftfeuchte auch mit UV-Licht reagieren können und andere reaktive Klebstoffe, Beschichtungsmaterialien und Dichtstoffe.

Gemäß der vorliegenden Erfindung werden reaktive Klebstoffe, Beschichtungsmaterialien und Dichtstoffe bevorzugt, es können aber auch thermoplastische Klebstoffe, Beschichtungsmaterialien und Dichtstoffe eingesetzt werden, wenn diese z.B. vor Verschmutzungen, Staub oder Feuchtigkeit geschützt werden sollen. Als thermoplastische Klebstoffe, Beschichtungsmaterialien und Dichtstoffe kommen solche auf Basis von Ethylenvinylacetat, Polyolefinen, Polyestern, Polyamiden, thermoplastischen Kautschuken, thermoplastischen Polyurethanen und anderen Thermoplasten, die vor den Umgebungsbedingungen geschützt werden sollen, in Frage.

Die Klebstoffe, Beschichtungsmaterialien und Dichtstoffe sind bevorzugt bei Raumtemperatur fest und haben im nicht vernetzten Zustand bevorzugt einen Schmelzpunkt oder Erweichungspunkt oberhalb der Raumtemperatur, besonders bevorzugt oberhalb von 40°C. Im Rahmen der vorliegenden Erfindung werden vorzugsweise 24°C als Raumtemperatur angenommen. Die Klebstoffe, Beschichtungsmaterialien und Dichtstoffe sind bei Raumtemperatur bevorzugt klebefrei oder haben nur eine geringe Klebrigkeit, so dass sie ohne weiteres aus den Verpackungsblistern entnommen werden können.

Die Klebstoffe, Beschichtungsmaterialien und Dichtstoffe können Füllstoffe und dem Fachmann bekannte weitere Zuschlagsstoffe wie Stabilisatoren und Pigmente enthalten. Die Klebstoffe, Beschichtungsmaterialien und Dichtstoffe haben eine Viskosität nach Brookfield von 2.000 mPas bis 200.000 mPas, bevorzugt von 10.000 mPas bis 100.000 mPas bezogen auf die jeweilige Temperatur bei der Befüllung.

Ein Ausführungsbeispiel der Erfindung wird anhand der Figuren 1 bis 3 erläutert. Es zeigen:
- Fig. 1: den Querschnitt einer Blisterverpackung senkrecht zur Deckelfolie,
- Fig. 2: den Querschnitt einer Blisterverpackung mit ovalem Kavitätenquerschnitt entlang der Ebene zur Deckelfolie in Höhe der Linie XX' mit Aufsicht aus Richtung A gem. Fig. 1.

In den Figuren ist eine Blisterverpackung 1 dargestellt, die ein Kunststofffolienformteil 2 zeigt, welches eine Kavität 3 mit einer Kavitätenwandung 5 aufweist, wobei das Kunststofffolienformteil 2 derart mit einer Deckelfolie 4 verbunden ist, dass die Kavität verschlossen ist. In der Kavität befindet sich der Kleb-, Beschichtungs- oder Dichtstoff-Formkörper (nicht dargestellt).

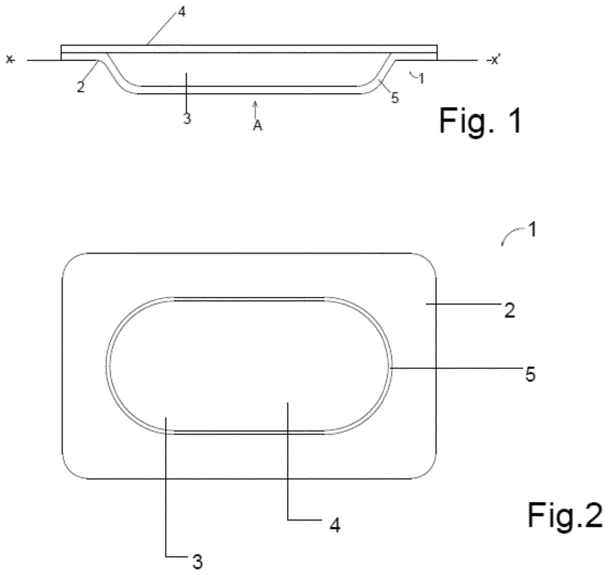

Fig. 1 zeigt einen Querschnitt der Blisterverpackung 1 senkrecht zur Deckelfolie, so dass die Kavitätenwandung sichtbar wird. Fig. 2 zeigt den Querschnitt der Blisterverpackung 1 mit ovalem Kavitätenquerschnitt entlang der Ebene zur Deckelfolie in Höhe der Linie XX' mit Aufsicht aus Richtung A gem. Fig. 1. Eine alternative Blisterverpackung 1 analog zu Fig. 2, ergibt sich daraus, dass anstelle eines ovalen Kavitätenquerschnitts ein runder Querschnitt vorliegt. Die Deckelfolie 4 ist in Fig. 2 lediglich im Bereich der Kavität 3 sichtbar und wird im Übrigen von dem Kunststofffolienformteil 2 verdeckt. Der Kleb-, Beschichtungs- oder Dichtstoff-Formkörper ist nicht dargestellt.

### Bezugszeichenliste

- (1): Blisterverpackung
- (2): Kunststofffolienformteil
- (3): Kavität
- (4): Deckelfolie
- (5): Kavitätenwandung

## Patentansprüche

1. Eine mit einem bei Raumtemperatur festen Kleb-, Beschichtungs- oder Dichtstoff-Formkörper gefüllte Blisterverpackung (1) mit einem Kunststofffolienformteil (2), welches mindestens eine Kavität (3) aufweist, und einer Deckelfolie (4), wobei die Deckelfolie (4) die Kavität (3) verschließt, **dadurch gekennzeichnet, dass** die mindestens eine Kavität (3) ein Füllvolumen an Klebstoff, Beschichtungsmaterial oder Dichtstoff im Bereich von 5 ml bis 500 ml aufweist, dass der Klebstoff, das Beschichtungsmaterial oder der Dichtstoff eine Viskosität von 2.000 bis 200.000 mPas nach Brookfield bei zumindest einer Temperatur in einem Temperaturbereich von 80°C bis 180°C aufweist, dass der Kunststofffolienformteil (2) und die Deckelfolie (4) miteinander verschweißt oder verklebt sind und dass die Deckelfolie (4) eine Aluminiumfolie, eine metallisierte Verbundfolie, ein Laminat aus Aluminium/Polypropylen oder eine siegelfähige mit SiOₓ oder AlOₓ beschichtete Monofolie darstellt.

2. Blisterverpackung (1) nach Anspruch 1, **dadurch gekennzeichnet, dass** der Klebstoff, das Beschichtungsmaterial oder der Dichtstoff ein reaktiver Klebstoff, ein reaktives Beschichtungsmaterial oder ein reaktiver Dichtstoff, bevorzugt mittels Luftfeuchte, thermisch und/oder unter UV-Licht vernetzbar, insbesondere ein feuchtigkeitsreaktiver Polyurethanschmelzklebstoff, ein feuchtigkeitsreaktiver Polyolefinschmelzklebstoff ein UV-härtbarer Schmelzklebstoff auf Acrylatbasis oder ein Dual Cure-Schmelzklebstoff, ist.

3. Blisterverpackung (1) nach Anspruch 1 oder 2, **dadurch gekennzeichnet, dass** der Kleb-, Beschichtungs- oder Dichtstoff-Formkörper einen Schmelz- oder Erweichungspunkt von oberhalb 40°C aufweist.

4. Blisterverpackung (1) nach einem oder mehreren der Ansprüche 1 bis 3, **dadurch gekennzeichnet, dass** die Blisterverpackung (1) eine einzige Kavität (3) aufweist.

5. Blisterverpackung (1) nach einem oder mehreren der Ansprüche 1 bis 4, **dadurch gekennzeichnet, dass** das Kunststofffolienformteil (2) aus einer Verbundfolie gebildet wird, die mindestens eine Kunststoffschicht aufweist, vorzugsweise eine Aluminiumschicht und insbesondere Schichten aus Polyamid / Aluminium / Polypropylen enthält.

6. Blisterverpackung (1) nach einem der Ansprüche 1 bis 5, **dadurch gekennzeichnet, dass** das Kunststofffolienformteil (2) eine Kavitätenwandung (5) mit einer Dicke im Bereich von 20 µm bis 500 µm aufweist.

7. Blisterverpackung (1) nach einem der Ansprüche 1 bis 6, **dadurch gekennzeichnet, dass** die Deckelfolie (4) eine Dicke von 10 µm bis 200 µm aufweist.

8. Blisterverpackung (1) nach einem oder mehreren der Ansprüche 1 bis 7, **dadurch gekennzeichnet, dass** Kunststofffolienformteil (2) und die Deckelfolie (4) mit Hilfe eines Heißsiegellackes, vorzugsweise aus Polypropylen, verschweißt sind oder mit Hilfe einer Polypropylen-Folie verschweißt sind, welche Bestandteil eines Laminats mit mindestens dem Aufbau Aluminium / Polypropylen ist.

9. Blisterverpackung (1) nach einem oder mehreren der Ansprüche 1 bis 8, **dadurch gekennzeichnet, dass** die Deckelfolie (4) auf der der mindestens einen Kavität (3) abgewandten Seite eine Riffelung aufweist.

10. Blisterverpackung (1) nach einem oder mehreren der Ansprüche 1 bis 9, **dadurch gekennzeichnet, dass** das Füllvolumen an Kleb-, Beschichtungs- oder Dichtstoff im Bereich von 10 ml bis 100 ml beträgt.

11. Blisterverpackung (1) nach einem der Ansprüche 1 bis 10, **dadurch gekennzeichnet, dass** die mindestens eine Kavität (3) ein Volumen aufweist, das zu mindestens 50 % durch das Füllvolumen an Kleb-, Beschichtungs- oder Dichtstoff belegt ist.

12. Blisterverpackung (1) nach einem oder mehreren der Ansprüche 1 bis 11, **dadurch gekennzeichnet, dass** die mindestens eine Kavität (3) eine Tiefe von bis zu 50 mm aufweist.

13. Blisterverpackung (1) nach einem oder mehreren der Ansprüche 1 bis 12, **dadurch gekennzeichnet, dass** der Kleb-, Beschichtungs- oder Dichtstoff-Formkörper an die Form der Kavität (3) angepasst ist.

14. Blisterverpackung (1) nach einem oder mehreren der Ansprüche 1 bis 13, **dadurch gekennzeichnet, dass** der Kleb-, Beschichtungs- oder Dichtstoff-Formkörper die Form einer Kugelscheibe, einer Halbkugel, eines Kugelabschnittes, eines Halbellipsoiden oder eines Halbzylinders bzw. eines beidseitig an den Enden abgerundeten Halbzylinders aufweist.

15. Verfahren zur Herstellung einer Blisterverpackung (1) nach einem der Ansprüche 1 bis 14, die Schritte enthaltend
(a) Befüllen mindestens einer Kavität (3) eines Kunststofffolienformteiles (2) mit einem bei Raumtemperatur festen Klebstoff, Beschichtungsmaterial oder Dichtstoff, vorzugsweise in inerter Umgebung, und
(b) Verbinden des Kunststofffolienformteiles (2) mit einer Deckelfolie (4), vorzugsweise durch Verschweißen oder Verkleben, vorzugsweise durch Verschweißen mit einem Heißsiegellack, zum Verschließen der mindestens einen Kavität (3), wobei der Kunststofffolienformteil (2) und die Deckelfolie (4) miteinander verschweißt oder verklebt werden.

16. Verfahren nach Anspruch 15, **dadurch gekennzeichnet, dass** das Kunststofffolienformteil (2) durch Einbringen der mindestens einen Kavität (3) in eine Bodenfolie hergestellt wurde.

## Claims

1. Blister pack (1) filled with a shaped adhesive, coating or sealant article that is solid at room temperature, said pack (1) having a shaped plastic film part (2), which has at least one cavity (3), and a lidding film (4), where the lidding film (4) closes the cavity (3), **characterized in that** the at least one cavity (3) has a filling volume with adhesive, coating material or sealant in the range from 5 ml to 500 ml, **in that** the adhesive, the coating material or the sealant has a viscosity of 2000 to 200 000 mPas by the Brookfield method at not less than one temperature in a temperature range from 80°C to 180°C, **in that** the shaped plastic film part (2) and the lidding film (4) are adhesively bonded or welded to one another and **in that** the lidding film (4) constitutes an aluminium foil, a metallized composite film, a laminate of aluminium/polypropylene, or a sealable, SiOₓ- or AlOₓ-coated monofilm.

2. Blister pack (1) according to Claim 1, **characterized in that** the adhesive, the coating material or the sealant is a reactive adhesive, a reactive coating material or a reactive sealant, preferably crosslinkable by means of atmospheric moisture, thermally and/or under UV light, more particularly a moisture-reactive polyurethane hotmelt adhesive, a moisture-reactive polyolefin hotmelt adhesive, a UV-curable acrylate-based hotmelt adhesive or a dual-cure hotmelt adhesive.

3. Blister pack (1) according to Claim 1 or 2, **characterized in that** the shaped adhesive, coating or sealant article has a melting or softening point of above 40°C.

4. Blister pack (1) according to one or more of Claims 1 to 3, **characterized in that** the blister pack (1) has a single cavity (3).

5. Blister pack (1) according to one or more of Claims 1 to 4, **characterized in that** the shaped plastic film part (2) is formed from a composite film which has at least one plastics layer, preferably an aluminium layer and more particularly layers of polyamide/aluminium/polypropylene.

6. Blister pack (1) according to any of Claims 1 to 5, **characterized in that** the shaped plastic film part (2) has a cavity wall (5) having a thickness in the range from 20 µm to 500 µm.

7. Blister pack (1) according to any of Claims 1 to 6, **characterized in that** the lidding film (4) has a thickness of 10 µm to 200 µm.

8. Blister pack (1) according to one or more of Claims 1 to 7, **characterized in that** shaped plastic film part (2) and the lidding film (4) are welded by means of a heat-sealing varnish, preferably of polypropylene, or are welded by means of a polypropylene film which is part of a laminate with at least the construction aluminium/polypropylene.

9. Blister pack (1) according to one or more of Claims 1 to 8, **characterized in that** the lidding film (4) has fluting on the side facing away from the at least one cavity (3).

10. Blister pack (1) according to one or more of Claims 1 to 9, **characterized in that** the filling volume with adhesive, coating material or sealant is in the range from 10 ml to 100 ml.

11. Blister pack (1) according to any of Claims 1 to 10, **characterized in that** the at least one cavity (3) has a volume of which at least 50% is occupied by the filling volume with adhesive, coating material or sealant.

12. Blister pack (1) according to one or more of Claims 1 to 11, **characterized in that** the at least one cavity (3) has a depth of up to 50 mm.

13. Blister pack (1) according to one or more of Claims 1 to 12, **characterized in that** the shaped adhesive, coating or sealant article is adapted to the shape of the cavity (3).

14. Blister pack (1) according to one or more of Claims 1 to 13, **characterized in that** the shaped adhesive, coating or sealant article has the shape of a spherical slice, a hemisphere, a spherical segment, a hemi-ellipsoid or a half-cylinder or of a half-cylinder rounded off at the ends on both sides.

15. Method for producing a blister pack (1) according to any of Claims 1 to 14, comprising the steps of
(a) filling at least one cavity (3) of a shaped plastic film part (2) with an adhesive, coating material or sealant which is solid at room temperature, preferably in an inert environment, and
(b) joining the shaped plastic film part (2) to a lidding film (4), preferably by welding or adhesive bonding, preferably by welding with a heat-sealing varnish, in order to close the at least one cavity (3), where the shaped plastic film part (2) and the lidding film (4) are adhesively bonded or welded to one another.

16. Method according to Claim 15, **characterized in that** the shaped plastic film part (2) was produced by introducing the at least one cavity (3) into a bottom film.

## Revendications

1. Emballage-coque (1) rempli d'un corps moulé de matériau adhésif, de matériau de revêtement ou de matériau d'étanchéité solide à température ambiante, comprenant une pièce moulée en film de matière plastique (2), qui présente au moins une cavité (3), et un film de couverture (4), le film de couverture (4) fermant la cavité (3), **caractérisé en ce que** l'au moins une cavité (3) présente un volume de remplissage de matériau adhésif, de matériau de revêtement ou de matériau d'étanchéité dans la plage allant de 5 ml à 500 ml, **en ce que** le matériau adhésif, le matériau de revêtement ou le matériau d'étanchéité présente une viscosité de 2 000 à 200 000 mPas selon Brookfield à au moins une température dans une plage de températures allant de 80 °C à 180 °C, **en ce que** la pièce moulée en film de matière plastique (2) et le film de couverture (4) sont soudés ou collés l'un à l'autre et **en ce que** le film de couverture (4) est un film d'aluminium, un film composite métallisé, un stratifié d'aluminium/polypropylène ou un monofilm scellable revêtu de SiOₓ ou d'AlOₓ.

2. Emballage-coque (1) selon la revendication 1, **caractérisé en ce que** le matériau adhésif, le matériau de revêtement ou le matériau d'étanchéité est un matériau adhésif réactif, un matériau de revêtement réactif ou un matériau d'étanchéité réactif, de préférence réticulable par l'humidité de l'air, thermiquement et/ou sous la lumière UV, notamment un matériau adhésif thermofusible de polyuréthane réactif à l'humidité, un matériau adhésif thermofusible de polyoléfine réactif à l'humidité, un matériau adhésif thermofusible à base d'acrylate durcissable sous UV ou un matériau adhésif thermofusible Dual Cure.

3. Emballage-coque (1) selon la revendication 1 ou 2, **caractérisé en ce que** le corps moulé de matériau adhésif, de matériau de revêtement ou de matériau d'étanchéité présente un point de fusion ou de ramollissement supérieur à 40 °C.

4. Emballage-coque (1) selon une ou plusieurs des revendications 1 à 3, **caractérisé en ce que** l'emballage-coque (1) présente une seule cavité (3).

5. Emballage-coque (1) selon une ou plusieurs des revendications 1 à 4, **caractérisé en ce que** la pièce moulée en film de matière plastique (2) est formée d'un film composite qui présente au moins une couche de matière plastique, de préférence une couche d'aluminium, et qui contient notamment des couches de polyamide/aluminium/polypropylène.

6. Emballage-coque (1) selon l'une quelconque des revendications 1 à 5, **caractérisé en ce que** la pièce moulée en film de matière plastique (2) présente une paroi de cavité (5) ayant une épaisseur dans la plage allant de 20 µm à 500 µm.

7. Emballage-coque (1) selon l'une quelconque des revendications 1 à 6, **caractérisé en ce que** le film de couverture (4) présente une épaisseur allant de 10 µm à 200 µm.

8. Emballage-coque (1) selon une ou plusieurs des revendications 1 à 7, **caractérisé en ce que** la pièce moulée en film de matière plastique (2) et le film de couverture (4) sont soudés à l'aide d'un vernis de scellement à chaud, de préférence en polypropylène, ou sont soudés à l'aide d'un film de polypropylène qui fait partie d'un stratifié ayant au moins la structure aluminium/polypropylène.

9. Emballage-coque (1) selon une ou plusieurs des revendications 1 à 8, **caractérisé en ce que** le film de couverture (4) présente une cannelure sur le côté détourné de l'au moins une cavité (3).

10. Emballage-coque (1) selon une ou plusieurs des revendications 1 à 9, **caractérisé en ce que** le volume de remplissage de matériau adhésif, de matériau de revêtement ou de matériau d'étanchéité est dans la plage allant de 10 ml à 100 ml.

11. Emballage-coque (1) selon l'une quelconque des revendications 1 à 10, **caractérisé en ce que** l'au moins une cavité (3) présente un volume qui est occupé à hauteur d'au moins 50 % par le volume de remplissage de matériau adhésif, de matériau de revêtement ou de matériau d'étanchéité.

12. Emballage-coque (1) selon une ou plusieurs des revendications 1 à 11, **caractérisé en ce que** l'au moins une cavité (3) présente une profondeur de jusqu'à 50 mm.

13. Emballage-coque (1) selon une ou plusieurs des revendications 1 a 12, **caractérisé en ce que** le corps moulé de matériau adhésif, de matériau de revêtement ou de matériau d'étanchéité est adapté à la forme de la cavité (3).

14. Emballage-coque (1) selon une ou plusieurs des revendications 1 à 13, **caractérisé en ce que** le corps moulé de matériau adhésif, de matériau de revêtement ou de matériau d'étanchéité présente la forme d'une rondelle sphérique, d'une demi-sphère, d'une section de sphère, d'un demi-ellipsoïde ou d'un demi-cylindre ou d'un demi-cylindre arrondi des deux côtés aux extrémités.

15. Procédé de fabrication d'un emballage-coque (1) selon l'une quelconque des revendications 1 à 14, comprenant les étapes suivantes :
(a) le remplissage d'au moins une cavité (3) d'une pièce moulée en film de matière plastique (2) avec un matériau adhésif, un matériau de revêtement ou un matériau d'étanchéité solide à température ambiante, de préférence dans un environnement inerte, et
(b) la liaison de la pièce moulée en film de matière plastique (2) à un film de couverture (4), de préférence par soudage ou collage, de préférence par soudage avec un vernis de scellement à chaud, pour fermer l'au moins une cavité (3), la pièce moulée en film de matière plastique (2) et le film de couverture (4) étant soudés ou collés l'un à l'autre.

16. Procédé selon la revendication 15, **caractérisé en ce que** la pièce moulée en film de matière plastique (2) a été fabriquée en ménageant l'au moins une cavité (3) dans un film de fond.
